# EUROPEAN PATENT SPECIFICATION

(11) **EP 3 795 710 B1**
(45) Date of publication and mention of the grant of the patent: **08.06.2022**
(21) Application number: 18923099.8
(22) Date of filing: 14.12.2018
(51) Int. Cl.: C22C 38/02, C22C 38/04, C21D 8/02, C22C 38/08, C22C 38/12, C22C 38/14, C22C 38/16, C22C 38/44, C22C 38/46, C22C 38/48, C22C 38/50, C21D 9/00

(54) **HOT-ROLLED THICK H-BEAM WITH YIELD STRENGTH GRADE OF 500 MPA**
WARMGEWALZTER DICKER H-TRÄGER MIT EINER STRECKGRENZE VON 500 MPA
POUTRE EN H ÉPAISSE LAMINÉE À CHAUD AVEC UNE LIMITE D'ÉLASTICITÉ DE 500 MPA

(30) Priority: 19.06.2018 CN 201810628873
(43) Date of publication of application: 24.03.2021
(73) Proprietor: Shandong Iron and Steel Co., Ltd., Jinan City, Shandong Province (CN)
(72) Inventor: ZHAO, Peilin, Jinan City, Shandong Province (CN); WANG, Zhongxue, Jinan City, Shandong Province (CN); GUO, Weida, Jinan City, Shandong Province (CN); LI, Chao, Jinan City, Shandong Province (CN); HAN, Wenxi, Jinan City, Shandong Province (CN); FANG, Jinlin, Jinan City, Shandong Province (CN); GUO, Xiuhui, Jinan City, Shandong Province (CN); ZHAO, Chuandong, Jinan City, Shandong Province (CN); LI, Chuanzhen, Jinan City, Shandong Province (CN); YANG, Dong, Jinan City, Shandong Province (CN)
(74) Representative: Murgitroyd & Company
(86) International application number: PCT/CN2018/121101
(87) International publication number: WO 2019/242253

(56) References cited:
- CN-A- 102 337 478
- CN-A- 104 046 902
- CN-A- 105 018 861
- CN-A- 106 834 944
- CN-A- 107 747 043
- CN-A- 108 893 675
- US-A1- 2014 301 888
- US-A1- 2015 204 071
- US-A1- 2015 361 664
- US-A1- 2016 273 066
- US-A1- 2016 273 066

## Description

### Field of the Invention

The invention relates to the field of metallurgical technology, in particular to a hot-rolled thick H-beam with a yield strength grade of equal to or greater than 500 MPa .

### Background of the Invention

High-end marine engineering equipment is indispensable for oil and natural gas exploration in marine areas. Marine environment equipment is used in harsh environments. In addition to facing high and low temperature, high pressure, high humidity, chloride salt corrosion and microbial corrosion, and withstanding the effects of sea wind, waves, and ocean currents, it also encounters natural disasters such as typhoons, ice floes, and earthquakes. Therefore, marine engineering steel for preparing marine engineering equipment must have high comprehensive properties, including high strength, low-temperature toughness, and corrosion resistance.

Currently disclosed patents about H-beams, as a necessary structural material for offshore oil engineering, mainly include two types. One type mainly adopts micro-alloying and normalizing rolling. This type of steel has stable performance and good weldability, but generally low strength. The other type uses reduced micro-alloy composition design, with water cooling control in a later stage to obtain a certain bainite structure. This type of steel product is poor in performance stability, with a difference in bainite content in different parts, causing poor stability of the steel. Therefore, the preparation of a high-strength H-beam requires a combination of the two types of processes, so that the prepared steel has not only high strength, but also good stability. A H-beam product with a larger thickness is more difficult to produce.

The cited prior art document US 2015/0204071 A1 discloses an H-section steel comprising a flange, a web and a chemical composition.

### Summary of the Invention

An object of the present invention is to provide a hot-rolled thick H-beam as claimed in the claims. The H-beam has good mechanical properties and is suitable for manufacturing support structures with a high requirement on low-temperature toughness, on offshore oil platforms, ocean-going transportation vessels and the like in various sea areas.

A technical solution of the present invention is as follows:
The chemical composition of the hot-rolled thick H-beam with a yield strength grade of 500 MPa of the present invention is, in percentage by weight: C: 0.10% to 0.20%, Si: 0.15% to 0.30%, Mn: 0.8% to 1.30%, Nb: 0.02% to 0.05%, V: 0.10% to 0.16%, Ni: 0.40% to 1.0%, P: ≤ 0.015%, S: ≤ 0.01%, Mo: 0.15% to 0.35%, Al: ≤ 0.05%, O: ≤ 0.004%, and N: 0.01% to 0.02%, optionally one or more of Cr and Ti, the contents of which are: Cr: ≤0.5%, and Ti: ≤0.05%, the balance being Fe and unavoidable impurities.

Preferably, Ni+Mo≤1.0%.

Further, alternatively, the chemical composition of the hot-rolled thick H-beam with a yield strength grade of 500 MPa is, in percentage by weight: C: 0.10% to 0.20%, Si: 0.15% to 0.30%, Mn: 0.8% to 1.20%, Nb: 0.02% to 0.05%, V: 0.10% to 0.14%, Ni: 0.40% to 0.7%, P: ≤ 0.015%, S: ≤ 0.01%, Mo: 0.20% to 0.35%, Al: ≤ 0.05%, O: ≤ 0.004%, N: 0.01% to 0.02%, and also one or more of Cr and Ti, the contents of which are: Cr: ≤0.5%, and Ti: ≤0.05%, the balance being Fe and unavoidable impurities. Further preferably, Ni+Mo≤1.0%, and Nb+V+Ti≤0.18%.

The present invention uses the above-mentioned components and adopts normalizing rolling of a beam blank, so that the prepared H-beam has a flange thickness up to 20-40mm.

Design principles of the chemical elements in the high-strength hot-rolled H-beam of the present invention are as follows:
Carbon: Carbon is a key element to ensure the formation of fine lamellar pearlite and granular bainite structure of the H-beam with a high strength grade of 500 MPa. Due to the need to obtain an appropriate amount of bainite and pearlite complex structure, increased strength is very necessary for the H-beam with a large thickness, so the carbon content should not be too low, and is controlled to 0.10% to 0.20%.

Silicon: Si is a deoxidizing element and contributes to increased strength, so a lower limit of the Si content is set to 0.15% or more. On the other hand, to ensure that a large amount of Si-containing Fe₂SiO₄ is not formed on the surface to affect the surface quality, an upper limit of the Si content is set to 0.30% or less. It is preferably 0.2% or less, and more preferably 0.25% or less.

Manganese: Mn can stabilize the austenite structure and increase the hardenability of steel. While delaying the pearlitic transformation, it also delays the transformation of ferrite, and causes the bainite zone to shift to the right, such that the steel is more sensitive to process conditions. To ensure strength and crack sensitivity, the Mn content is preferably set to 0.80% or more, more preferably 0.90% or more. The element Mn has a high segregation tendency in steel, and damages mechanical properties such as toughness and plasticity if added excessively. Therefore, with overall considerations, the Mn content in Benxi Steel is controlled to 0.8% to 1.30%.

### Phosphorus: P≤0.015%.

### Sulfur: S≤0.01%.

As unavoidable elements in steel, P and S can cause weld cracks and reduced toughness due to solidification segregation. Inclusions brought by the preparation process seriously affect the low-temperature toughness of steel, so their content should be minimized. Considering production practice and equipment capacity, the P content is preferably limited to 0.015% or less, more preferably to an upper limit of 0.012% or less. In addition, sulfur is liable to form a MnS inclusion and becomes the starting point of cracks and deteriorates the processability. The S content is preferably limited to 0.01% or less, more preferably to 0.005% or less. Lower limits of P and S are not limited particularly, and both exceed 0% depending on equipment capacity and cost control.

Aluminum: Al is used as a strong deoxidizing element in the preparation of steel. To ensure that the oxygen content in the steel is as low as possible, reduce the probability of inclusions, and enable the excess aluminum after deoxidation and the element nitrogen in the steel to form AlN precipitates, which can increase the strength of the steel and can refine the austenite grain size of the steel when being heated, therefore, the aluminum content is controlled within 0.05% in the present invention.

Titanium: Titanium is a strong carbide forming element. Adding a small amount of Ti to the steel is beneficial to fixing the N in the steel. TiN formed therefrom can ensure the austenite grains do not excessively grow when the blank is heated, thereby achieving the purpose of refining the original austenite grains. Titanium can also be combined with carbon and sulfur respectively in the steel to form compounds such as TiC, TiS, and Ti₄C₂S₂, which exist in the form of inclusions and second phase particles. These carbonitride precipitates of titanium can also prevent grain growth in the heat-affected zone during welding, and can also function to improve the welding performance of the finished steel sheet. Therefore, titanium is added in an amount of 0.05% or less in the present invention.

Niobium: Nb significantly increases the non-recrystallization temperature of austenite, and functions to refine grains in controlled rolling. It improves the strength of the steel, and can significantly increase the toughness of the steel, especially with an obvious effect of low-temperature toughness; and a very small amount of Nb can significantly refine grains of the matrix structure, and increase the strength. The Nb content is controlled to 0.02% to 0.05% in the present invention.

Vanadium: V is a strong carbonitride forming element in the steel. A large amount of carbonitrides containing V are formed in the later stage of rolling to achieve a precipitation strengthening effect, which is better especially when a VN alloy is added. Furthermore, VN can be used as nucleation particles of the matrix structure, which is beneficial to micronization of the structure. In view of the need to improve the strength, its content is controlled to 0.10% or more. However, too much V will also bring about a coarse second phase and deteriorate the toughness. The V content is 0.10% to 0.16%.

Nickel: Ni is an extremely effective element for improving the strength and low-temperature toughness of the steel. As the thickness of H-beam increases, the requirement on structure homogeneity is very prominent. In one aspect, Ni can expand the austenite area and improve the hardenability. In another aspect, it can refine the pearlite lamellae to refine the pearlite, thereby achieving a fine-grain strengthening effect. In yet another aspect, the addition of nickel also achieves corrosion resistance to some extent, thereby improving the service life of steel. Therefore, the Ni content is controlled within the range of 0.40% to 1.0%.

Molybdenum: Mo is an element that improves hardenability when soliddissolved in the steel, and functions to improve strength. A lower limit of the Mo content is set to 0.15% or more. Even if the steel contains more than 0.35% of Mo, a Mo carbide (Mo₂C) will be quantitatively precipitated, and the effect of improving hardenability by the solid solution Mo is also saturated. Therefore, an upper limit of the Mo content is set to 0.35% or less. Considering factors such as cost, the upper limit of the Mo content is preferably 0.35% or less, more preferably 0.30% or less.

Nitrogen: To cooperate with the use of the element V, a VN alloy is added to achieve a precipitation strengthening effect and improve strength, thus causing an increase in the N content. A very high N content is liable to induce quality defects in the cast blank. Therefore, the present invention requires a nitrogen content of 0.01% to 0.02%.

Oxygen: To avoid reaction with a strong oxidizing element to form an oxide inclusion of large particles, which deteriorates the toughness and plasticity of the steel, the present invention requires a nitrogen content ≤ 0.004%.

Chromium: Cr can improve the strength, hardness and wear resistance of the steel. Adding chromium to the steel can significantly improve the hardenability of the steel, and chromium, together with the Mo element, is beneficial to the formation of granular bainite structure. A very high or low Cr content is unfavorable for the hardenability and delayed fracture of the steel, and is liable to cause defects. The Cr in the steel is controlled to 0.5% or less and is appropriately added according to the amount of bainite required.

In the present invention, Ni+Mo≤1.0%, so that the hardenability of the steel is uniform and the state of the matrix structure is under stable control; and Nb+V+Ti≤0.18%, so that the second phase structure in the steel is controlled at an appropriate level. A very high content of such elements is prone to combination with N to form too many nitrides, and a large amount of precipitates is liable to deteriorate the toughness of the steel. Therefore, it is reasonable to set Nb+V+Ti≤0.18% as an upper limit for this type of steel.

The H-beam has a yield strength of greater than or equal to 500MPa, a tensile strength of greater than or equal to 650MPa, an elongation of greater than or equal to 20%, and an impact energy of greater than or equal to 100J at -40°C.

The present application also describes a preparation method for the above-mentioned H-beam with a yield strength grade of equal to or greater than 500 MPa, the preparation method successively including steps of: hot metal pretreatment, smelting in a converter, argon blowing into a ladle, LF refining, beam blank casting, slow cooling in a slow cooling pit or hot delivery and hot charging of a continuous cast blank, profile steel wire rolling, and intensive slow cooling on a cooling bed; wherein in the continuous casting process, considering a large amount of alloy, slow cooling in an insulating pit is necessary, to reduce the probability of surface defects. In addition, the continuous cast blank may also be online hot-delivered and hot-charged into a heating furnace to avoid a high cooling rate and the generation of defects by very rapid cooling.

During rolling, the soaking temperature of the heating furnace is 1230 to 1270°C, and the in-furnace time of the blank is 150 to 200 min; the initial temperature of finish rolling is 1120 to 1180°C, water cooling between finishing mill stands is all turned on, and the finishing temperature of finish rolling is 750 to 820°C. To ensure the control of the finishing rolling temperature, an extremely low compression ratio is used in the last two passes of finish rolling, preferably the compression ratio being 5% to 10%; finish rolled steel enters a roller bed with an insulation cover for heat preservation to ensure a uniform temperature drop, and then enters a cooling bed for slow cooling.

In the process, the beam blank is rolled for production, and the compression ratio is relatively small, so the finishing rolling temperature must be ensured to achieve structure control. By reducing the rolling cycle, the finishing rolling temperature meets the phase transition point requirement. Finally, the structure and mechanical properties are obtained as required; and the rolled steel enters the cooling bed for slow cooling, which is conducive to the later dispersion and precipitation of the second phase.

By adopting low-carbon micro-alloying process design in combination with profile steel groove rolling, the present invention achieves industrial production of large and medium-sized high-strength-toughness H-beam products for marine engineering.

Processes not mentioned in the present invention can all be carried out as in the prior art.

The technical solution of the present invention has the following advantages:
1. Considering characteristics of rolling a beam blank into a large-sized thickwalled H-beam, it adopts a composite micro-alloy composition design with a medium C content and high Ni and V contents suitable for normalizing rolling, thereby obtaining, on a rolling mill for a hot-rolled H-beam, a stably controlled high-strength-toughness hot-rolled H-beam of a 500 MPa grade or higher for maritime use.
2. The final structure of the H-beam is mainly refined pearlite and pro-eutectoid ferrite, containing a small amount of a bainite structure, and is easier to control.
3. By means of structural refinement, phase transformation strengthening, and precipitation strengthening, it achieves a good effect that the H-beam is provided with an impact toughness of greater than 100 J at a low temperature of -40°C under high strength and large thickness requirements.

### Brief Description of the Drawings

Fig. 1 is an OM structure diagram of a hot-rolled H-beam prepared in Embodiment 2 of the present invention.
Fig. 2 is a SEM structure diagram of a hot-rolled H-beam prepared in Embodiment 2 of the present invention.
Fig. 3 is a second phase TEM graph of the hot-rolled H-beam prepared in Embodiment 2 of the present invention.

### Detailed Description of the Embodiments

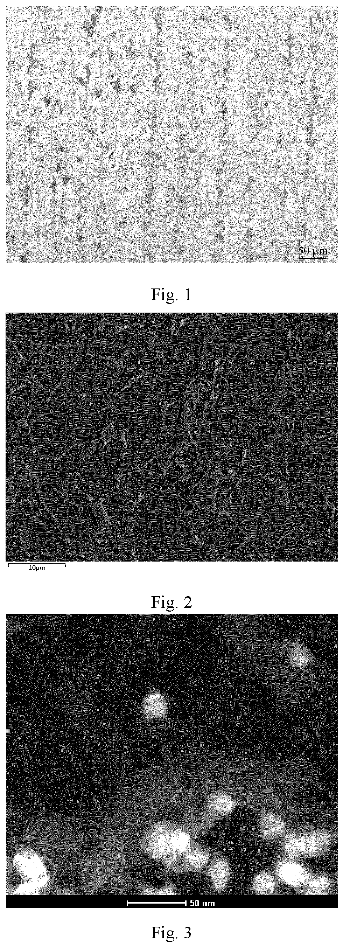

Continuously cast blanks in the following embodiments are prepared by the following process: based on a set chemical composition range (Table 1), with chemical components C, Si, Mn, S, P and Fe as raw materials, smelting in a converter, refining, continuous casting, direct heating or soaking of a cast blank are carried out. Preparation steps of Embodiments 1-5 are as follows:
Steel is subjected to hot metal pretreatment, smelting in a converter, argon blowing into a ladle, LF refining, beam blank casting, profile steel wire rolling, and intensive slow cooling on a cooling bed. Profile steel wire rolling includes two passes of rolling: rough rolling and finish rolling. Processes not mentioned in the present invention can all be carried out as in the prior art. The hot rolling process is mainly based on temperature control, with two passes added to the original process, and the compression ratio is extremely low, so that the finishing rolling temperature of the H-beam can be better controlled. Temperature is detected at an outer side of a flange, and the rolled material is slowly cooled on a cooling bed after rolling. The final structure of the H-beam obtained is mainly refined pearlite, containing a small amount of a bainite structure. The chemical composition and specific process of Embodiments 1-5 are shown in Table 1 below, and the specific structure is shown in Figs. 1-3.

**Table 1 Chemical composition (wt%, the balance being iron)**

| Item | C | Si | Mn | P | S | Mo | V | Nb | Ni | Al | N |
|---|---|---|---|---|---|---|---|---|---|---|---|
| Embodim ent 1 | 0.19 | 0.2 1 | 0.8 5 | 0.01 5 | 0.00 9 | 0.2 0 | 0.1 1 | 0.02 5 | 0.4 5 | 0.03 | 0.01 2 |
| Embodim ent 2 | 0.14 | 0.1 9 | 1.1 0 | 0.01 3 | 0.00 7 | 0.3 3 | 0.1 2 | 0.03 0 | 0.5 | 0.02 5 | 0.01 6 |
| Embodim ent 3 | 0.12 | 0.3 0 | 1.2 1 | 0.01 4 | 0.00 5 | 0.1 9 | 0.1 5 | 0.03 3 | 0.8 | 0.04 | 0.01 1 |
| Embodim ent 4 | 0.16 | 0.2 0 | 0.9 5 | 0.01 2 | 0.00 6 | 0.2 5 | 0.1 3 | 0.03 1 | 0.7 5 | 0.02 5 | 0.01 3 |
| Embodim ent 5 | 0.11 | 0.2 5 | 1.2 9 | 0.01 3 | 0.00 5 | 0.2 6 | 0.1 5 | 0.02 9 | 0.6 8 | 0.03 6 | 0.01 2 |

Hot rolling process conditions in Embodiments 1-3 are shown in Table 2. Please refer to the standard BS EN ISO 377-1997 "Location and preparation of test pieces for mechanical testing"; for a test method for yield strength, tensile strength and elongation, refer to the standard ISO6892-1-2009 "Metallic materials - Tensile testing at ambient temperature" ; and for an impact test method, refer to the standard ISO 148-1 "Metallic materials - Charpy pendulum impact test", and results are shown in Table 3.

**Table 2 Hot rolling process in the embodiments**

| Item | Heating temperature (°C) | Holding time (Min) | Initial rolling temperature (°C) | Finishing rolling temperature (°C) | Flange thickness t mm |
|---|---|---|---|---|---|
| Embodiment 1 | 1240 | 120 | 1150 | 770 | 20 |
| Embodiment 2 | 1250 | 145 | 1130 | 800 | 25 |
| Embodiment 3 | 1255 | 150 | 1120 | 810 | 28 |
| Embodiment 4 | 1260 | 160 | 1140 | 800 | 30 |
| Embodiment 5 | 1250 | 160 | 1145 | 790 | 35 |

**Table 3 Results of mechanical property tests in the embodiments**

| Item | Yield Strength (MPa) | Tensile strength (MPa) | Elongation (%) | Impact energy at -40°C (J) |
|---|---|---|---|---|
| Embodiment 1 | 540 | 680 | 21 | 100 |
| Embodiment 2 | 550 | 690 | 23 | 120 |
| Embodiment 3 | 580 | 710 | 25 | 110 |
| Embodiment 4 | 520 | 665 | 24 | 120 |
| Embodiment 5 | 510 | 660 | 26 | 150 |

It can be seen from Table 3 that the yield strength of Embodiments 1-5 of the present invention is maintained at a grade of equal to or greater than 500 MPa, and the impact energy at -40°C is relatively high. It can meet use conditions of prepared marine engineering components in extremely low environments, and is suitable for manufacturing support structures with a high requirement on low-temperature toughness, on offshore oil platforms, ocean-going transportation vessels and the like.

Finally, it should be noted that the above embodiments are only used for describing instead of limiting the technical solutions of the present invention.

## Claims

1. A hot-rolled thick H-beam with a yield strength of greater than or equal to 500 MPa, the H-beam having a flange thickness of 20 to 40 mm, wherein the chemical composition of the hot-rolled H-beam is, in percentage by weight: C: 0.10% to 0.20%, Si: 0.15% to 0.30%, Mn: 0.8% to 1.30%, Nb: 0.02% to 0.05%, V: 0.10% to 0.16%, Ni: 0.40% to 1.0%, P: ≤ 0.015%, S:≤ 0.01%, Mo: 0.15% to 0.35%, Al: ≤0.05%, 0: ≤ 0.004%, and N: 0.01% to 0.02%, and optionally one or more of Cr and Ti, the contents of which are: Cr: ≤0.5%, and Ti: ≤0.05%, the balance being Fe and unavoidable impurities.

2. The H-beam according to claim 1, wherein Ni+Mo:≤1.0%.

3. A hot-rolled thick H-beam as claimed in claim 1, wherein the chemical composition of the hot-rolled H-beam further comprises one or more of Cr and Ti, the contents of which are: Cr: ≤0.5%, and Ti: ≤0.05%.

4. The H-beam according to claim 3, wherein Ni+Mo≤1.0%, and Nb+V+Ti≤0.18%.

## Patentansprüche

1. Ein warmgewalzter dicker Doppel-T-Träger mit einer Streckgrenze von mehr als oder gleich 500 MPa, wobei der Doppel-T-Träger eine Flanschdicke von 20 bis 40 mm aufweist, wobei die chemische Zusammensetzung des warmgewalzten Doppel-T-Trägers in Gewichtsprozent wie folgt ist: C: 0,10 % bis 0,20 %, Si: 0,15 % bis 0,30 %, Mn: 0,8 % bis 1,30 %, Nb: 0,02 % bis 0,05 %, V: 0,10 % bis 0,16 %, Ni: 0,40 % bis 1,0 %, P: ≤ 0,015 %, S: ≤ 0,01 %, Mo: 0,15 % bis 0,35 %, Al: ≤ 0,05 %, 0: ≤ 0,004 % und N: 0,01 % bis 0,02 % und optional eines oder mehrere von Cr und Ti, deren Gehalt wie folgt ist: Cr: ≤ 0,5 % und Ti: ≤ 0,05 %, wobei der Rest Fe und unvermeidbare Verunreinigungen sind.

2. Doppel-T-Träger gemäß Anspruch 1, wobei Ni + Mo: ≤ 1,0 %.

3. Warmgewalzter dicker Doppel-T-Träger gemäß Anspruch 1, wobei die chemische Zusammensetzung des warmgewalzten Doppel-T-Trägers ferner eines oder mehrere von Cr und Ti beinhaltet, deren Gehalt wie folgt ist: Cr: ≤ 0,5 % und Ti: ≤ 0,05 %.

4. Doppel-T-Träger gemäß Anspruch 3, wobei Ni + Mo ≤ 1,0 % und Nb + V + Ti ≤ 0,18 %.

## Revendications

1. Une poutrelle H épaisse laminée à chaud présentant une limite d'élasticité supérieure ou égale à 500 MPa, la poutrelle H ayant une épaisseur d'aile allant de 20 à 40 mm, où la composition chimique de la poutrelle H laminée à chaud est, en pourcentage en poids : C : 0,10 % à 0,20 %, Si : 0,15 % à 0,30 %, Mn : 0,8 % à 1,30 %, Nb : 0,02 % à 0,05 %, V : 0,10 % à 0,16 %, Ni : 0,40 % à 1,0 %, P : ≤ 0,015 %, S : ≤ 0,01 %, Mo : 0,15 % à 0,35 %, Al : ≤ 0,05 %, 0 : ≤ 0,004 %, et N : 0,01 % à 0,02 %, et facultativement un ou plusieurs éléments parmi Cr et Ti, dont les teneurs sont : Cr : ≤ 0,5 %, et Ti : ≤ 0,05 %, le reste étant Fe et des impuretés inévitables.

2. La poutrelle H selon la revendication 1, où Ni + Mo : ≤ 1,0 %.

3. Une poutrelle H épaisse laminée à chaud telle que revendiquée dans la revendication 1, où la composition chimique de la poutrelle H laminée à chaud comprend en outre un ou plusieurs éléments parmi Cr et Ti, dont les teneurs sont : Cr : ≤ 0,5 %, et Ti : ≤ 0,05 %.

4. La poutrelle H selon la revendication 3, où Ni + Mo ≤ 1,0 %, et Nb + V + Ti ≤ 0,18 %.
